Europäisches Patentamt

**European Patent Office**

Office européen des brevets

(11) Numéro de publication:

**0 063 652**
A1

(12) DEMANDE DE BREVET EUROPEEN

(21) Numéro de dépôt: **81200461.2**

(22) Date de dépôt: **29.04.81**

(51) Int. Cl.³: **C 04 B 43/10,** C 04 B 43/12, C 04 B 31/26

(43) Date de publication de la demande: **03.11.82**
**Bulletin 82/44**

(84) Etats contractants désignés: **BE CH DE GB LI LU NL SE**

(71) Demandeur: **RHINOLITH Société anonyme, Zône Industrielle Ungersheim, F-68190 Ensisheim (FR)**

(72) Inventeur: **Fricker, Gilbert, ZI, F-68190 Ensisheim (FR)**

(54) Masse isolante à projeter.

㉗ L'invention concerne une masse contenant essentiellement des particules de Mica, des fibres de cellulose, des additifs chimiques et un liant, que l'on peut projeter manuellement ou au pistolet pour réaliser une surface absorbante acoustique, un revêtement isolant thermique ou un revêtement de protection contre l'incendie.

L'adjonction de poudre de mica déshydratée permet de réduire les quantités habituelles d'additifs chimiques et de renforcer la résistance au feu, le caractère ininflammable et imputrescible du produit; cette adjonction a aussi pour effet de réduire le prix de la masse isolante.

Parmi les applications les plus intéressantes on peut citer la réalisation de l'isolation thermique et de la protection incendie des immeubles d'habitation et des locaux industriels.

0063652

La présente invention concerne une masse contenant essentiellement des particules de mica, des fibres de cellulose, des additifs chimiques et un liant, que l'on peut projeter manuellement ou au pistolet
pour réaliser une surface absorbante acoustique, un revêtement isolant
thermique ou un revêtement de protection contre l'incendie.

On connaît à ce jour plusieurs types de produits destinés à apporter l'isolation thermique, la correction acoustique et une protection
contre l'incendie, et applicables par projection. Les produits connus
de ce genre se composent de fibres de verre, de fibres de roche, de
fibres d'amiante ou de fibres d'autre nature auxquelles sont ajoutées
des additifs tels que liant minéral, liant végétal ou liant synthétique. Les produits connus de ce genre ont l'inconvénient d'être des matériaux chers ; certains produits résistent mal par ailleurs à une élévation de chaleur ou à un incendie.

La présente invention concerne une masse constituée de fibres de
cellulose traitées à l'aide de divers additifs dont de l'acide borique
et du pentahydrate de borax, à laquelle on a adjoint une faible quantité de poudre de mica deshydratée. La fibre de cellulose est obtenue
à partir de recyclage de papiers, cartons et chiffons sélectionnés.
L'ajout de poudre de mica a l'avantage de permettre de réduire les quantités d'additifs chimiques et par conséquent le coût du produit. Il permet aussi de renforcer sensiblement la résistance au feu, le caractère
ininflammable et imputrescible du produit obtenu.

Les caractéristiques de la poudre de mica utilisée sont les suivantes :

- analyse chimique :
  dioxyde de silicium $SiO_2$ env. 47 % en poids,
  alumine $Al_2O_3$ env. 36 % en poids,
  oxyde de potassium $K_2O$ env. 11 % en poids,
  oxyde ferreux $Fe_2O_3$ env. 2 % en poids
- pH = 8,8
- poids spécifique = 2,6 à 2,9

La masse ainsi constituée permet de réaliser l'isolation thermique, la protection au feu, l'isolation phonique ou la correction acoustique des bâtiments.

La masse est conditionnée en sacs et sa mise en oeuvre se réalise
toujours à l'aide d'une machine à projeter spéciale.

Suivant le type d'application, le produit est disposé en vrac,
projeté avec un adhésif synthétique ou avec un liant hydraulique.

- Disposition en vrac : (ex. isolation des planchers de combles). La machine est mobile et généralement installée à l'extérieur des bâtiments à traiter. L'alimentation se fait par sacs de 15 kg, la machine décomprime et expanse la masse qui est acheminée sur place par l'intermédiaire d'un tuyau souple.

- Projection avec adhésif synthétique : (ex. isolation des murs, plafonds ou sous-toitures). La même machine permet d'acheminer la masse qui est projetée sur le support avec un adhésif synthétique. Les débits de la masse et de l'adhésif sont soigneusement réglés pour permettre d'obtenir un mélange homogène ayant une bonne adhérence sur le support.

- Projection avec liant hydraulique (ex. protection au feu de structures métalliques). Le mélange masse + liant hydraulique est effectué en usine. Le produit livré prêt à l'emploi est projeté à l'aide d'une machine permettant une adjonction d'eau et un malaxage prélable.

La masse ainsi mise en oeuvre permet de réaliser de façon simple et économique l'isolation thermique et phonique, la correction acoustique et la protection au feu de bâtiments à usage d'habitation, à usage industriel, commercial ou public.

REVENDICATIONS

1. Masse constituée de fibres de cellulose, d'additifs chimiques et d'un liant, que l'on peut appliquer manuellement ou projeter à l'aide d'une machine pour réaliser une isolation thermique, une correction acoustique ou une protection incendie ou une isolation phonique, caractérisée en ce que l'on y a ajouté une faible quantité de poudre de mica déshydratée permettant de réduire les quantités habituelles d'additifs chimiques.

2. Masse suivant la revendication 1, caractérisée en ce que la poudre de mica utilisée est composée de :

- 47 % en poids de dioxyde de silicium $SiO_2$
- 36 % en poids d'alumine $Al_2O_3$
- 11 % en poids d'oxyde de potassium $K_2O$
- 2 % en poids d'oxyde ferreux $Fe_2O_3$

3. Masse suivant les revendications 1 et 2 caractérisée en ce qu'il est possible de la mettre en oeuvre à l'aide d'une machine spéciale permettant son acheminement et son application en vrac.

4. Masse suivant les revendications 1 et 2 caractérisée en ce qu'il est possible de la mettre en oeuvre à l'aide d'une machine spéciale permettant son acheminement et le mélange avec un liant synthétique, et rendant possible une application par projection.

5. Masse suivant les revendications 1 et 2, caractérisée en ce qu'elle a été additionnée en usine d'un liant hydraulique dans la proportion d'environ 30 % en poids.

6. Masse suivant la revendication 5, caractérisée en ce qu'il est possible de la mettre en oeuvre à l'aide d'une machine spéciale permettant son acheminement, le mélange avec de l'eau selon un dosage précis et la projection sur un support.

REVENDICATIONS.

1. Masse légère isolante constituée de fibres de cellulose, d'additifs chimiques et d'un liant, que l'on peut appliquer manuellement ou projeter à l'aide d'une machine pour réaliser une isolation thermique, une correction acoustique ou une protection incendie ou une isolation phonique, caractérisée en ce que l'on y a ajouté une faible quantité de poudre de mica déshydratée permettant de réduire les quantités habituelles d'additifs chimiques.

2. Masse suivant la revendication 1, caractérisée en ce que la poudre de mica utilisée est composée de :
   - 47 % en poids de dioxyde de silicium $SiO_2$
   - 36 % en poids d'alumine $Al_2O_3$
   - 11 % en poids d'oxyde de potassium $K_2O$
   - 2 % en poids d'oxyde ferreux $Fe_2O_3$

3. Masse suivant les revendications 1 et 2 caractérisée par les propriétés physiques suivantes :
   - masse volumique sèche : 30 à 65 $kg/m^3$
   - coefficient de conductivité thermique $\lambda$ = 0,037 à 0,060 W/m °C
   - coefficient d'absorption acoustique moyen $\alpha_s$ = 0,80
   - réaction au feu : non inflammable et classé M1 suivant la procédure française de classification de réaction au feu définie par arrêté du 4 juin 1973.

4. Masse suivant les revendications 1 et 2 caractérisée en ce qu'il est possible de la mettre en oeuvre à l'aide d'une machine spéciale permettant son acheminement et son application en vrac.

5. Masse suivant les revendications 1 et 2 caractérisée en ce qu'il est possible de la mettre en oeuvre à l'aide d'une machine spéciale permettant son acheminement et le mélange avec un liant sunthétique, et rendant possible une application par projection.

6. Masse suivant les revendications 1 et 2, caractérisée en ce qu'elle a été additionnée en usine d'un liant hydraulique dans la proportion d'environ 30 % en poids.

7. Masse suivant la revendication 5, caractérisée en ce qu'il est possible de la mettre en oeuvre à l'aide d'une machine spéciale permettant son acheminement, le mélange avec de l'eau selon un dosage précis et la la projection sur un support.

Office européen
des brevets

**RAPPORT DE RECHERCHE EUROPEENNE**

0063652

Numéro de la demande

EP 81 20 0461.2

| Catégorie | Citation du document avec indication, en cas de besoin, des parties pertinentes | Revendica-tion concernée | CLASSEMENT DE LA DEMANDE (Int. Cl.³) |
|---|---|---|---|
| | DE - A1 - 2 461 781 (CAPE BOARDS AND PANELS LTD.)<br>* revendications 1, 2, 12 *<br>-- | 1,5 | C 04 B 43/10<br>C 04 B 43/12<br>C 04 B 31/26 |
| | CH - A5 - 593 876 (PLASTONIUM AG)<br>* colonne 2, lignes 58 à 66; colonne 3, lignes 10 à 16 *<br>-- | 1 | |
| | DE - A1 - 2 445 066 (F. RUESCH)<br>* page 2 *<br>-- | 1 | **DOMAINES TECHNIQUES RECHERCHES (Int. Cl.³)** |
| A | CA - A - 957 455 (W.A. DEACON)<br>* page 2 *<br>-- | 1 | C 04 B 13/00<br>C 04 B 19/00<br>C 04 B 31/00 |
| A | US - A - 2 728 681 (S. CLIPSON)<br>-- | | C 04 B 43/00 |
| A | US - A - 4 166 749 (STERRETT et al.)<br>---- | | |

### DOCUMENTS CONSIDERES COMME PERTINENTS

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| Berlin | 15-10-1981 | HÖRNER |

OEB Form 1503.1   06.78